# EUROPÄISCHE PATENTSCHRIFT

(11) **EP 3 520 622 B1**
(45) Veröffentlichungstag und Bekanntmachung des Hinweises auf die Patenterteilung: **13.05.2020**
(21) Anmeldenummer: 18154484.2
(22) Anmeldetag: 31.01.2018
(51) Int. Cl.: A23G 3/34, A23G 3/42, A23G 3/54

(54) **ZUCKERFREIES HARTDRAGEE**
SUGAR-FREE HARD COATED TABLET
DRAGÉE DURE SANS SUCRE

(43) Veröffentlichungstag der Anmeldung: 07.08.2019
(73) Patentinhaber: Müller-Vivil, Alexander, 77654 Offenburg (DE)
(72) Erfinder: Müller-Vivil, Alexander, 77654 Offenburg (DE)
(74) Vertreter: Kossak, Sabine

(56) Entgegenhaltungen:
- EP-A1- 0 201 412
- EP-A1- 0 625 311
- EP-A1- 1 057 414
- EP-A1- 1 234 506
- EP-A2- 0 415 656
- WO-A1-2011/082050
- US-A- 4 127 645
- US-A1- 2002 028 276
- US-A1- 2003 198 713

## Beschreibung

Gegenstand der Erfindung ist ein zuckerfreies Hartdragee bestehend aus einem Komprimatkern und einer Hartdragierung, die den Komprimatkern vollständig umgibt, wobei das Hartdragee zuckerfrei ist.

Bonbon und Zuckerwaren werden in vielen verschiedenen Formen und Varianten angeboten. Eine beliebte Form sind Dragees. Dragees weisen einen Kern und eine Außenschicht, auch Dragierung genannt, auf. Gemäß dem Bundesverband der Deutschen Süßwarenindustrie e.V. werden Dragees entweder nach ihrem Kern oder ihrer Außenschicht benannt. Beliebt sind beispielweise Kaudragees, Liebesperlen, Schokolinsen oder Schokodragees. Bei Hartdragees besteht die Außenschicht aus Zucker oder Zuckeraustauschstoffen mit geringer Restfeuchte von weniger als 3 %und bildet eine glasharte, feinkristalline Außenschicht. Bei Weichdragees besteht die Außenschicht z.B. aus Zucker mit geringen Zuschlägen und geringer Restfeuchte.

Aus gesundheitlichen Gründen erfreuen sich zuckerfreie Süßwaren zunehmender Beliebtheit, da sie weniger Kalorien haben als zuckerhaltige Produkte und besonders bei der Verwendung von Polyolen als Zuckeraustauschstoffen zahnfreundlich und insulinunabhängig sind und daher für Diabetiker geeignet sind. Bei der Verwendung von Zuckeraustauschstoffen und Süßstoffen können jedoch häufig nicht die herkömmlichen Herstellungsverfahren für Süßwaren verwendet werden, da die Zuckeraustauschstoffe und Süßstoffe andere Verarbeitungseigenschaften haben. Manche Zuckeraustauschstoffe haben zudem in größerer Menge eine laxierende Wirkung und können zu Blähungen führen. Insbesondere bei Maltit und Sorbit tritt bei Überschreitung einer bestimmten Aufnahmemenge eine laxierende Wirkung auf.

Dokumente EP0201412 , EP0415656 und US4127645 beschreiben zuckerfreie dragierte Konfektprodukte.

Die EP 0 963 161 beschreibt zuckerfreie dragierte Kaubonbons. Auf Grund der dort diskutierten Probleme beim Herstellungsverfahren wird als Zuckeraustauschstoff Isomalt eingesetzt, um die gewünschte Textur zu erhalten und eine knusprige nicht klebende Drageedecke zu bekommen. Kaubonbons dürfen dabei anders als Hartdragees nicht zu hart sein, damit der Konsument sie gut kauen kann. Die Herstellung von Hartdragees wird nicht beschrieben.

Aufgabe der vorliegenden Erfindung ist es ein Hartdragee bereit zu stellen, dass die vorstehenden Probleme überwindet, zuckerfrei ist, im industriellen Maßstab herstellbar ist und insbesondere einen guten Geschmack, gute sensorische und organoleptische Eigenschaften hat.

Die Aufgabe wird erfindungsgemäß gelöst durch ein Hartdragee gemäß Anspruch 1.

Weitere Ausführungsformen sind Gegenstand der Unteransprüche oder nachfolgend beschrieben.

Das erfindungsgemäße zuckerfreie Hartdragee besteht aus einem Komprimatkern und einer Hartdragierung, die den Komprimatkern vollständig umgibt. Das erfindungsgemäße Hartdragee ist zuckerfrei. Der Komprimatkern enthält als Zuckeraustauschstoffe eine Mischung aus Erythritol, Isomalt und D-Sorbitol und mindestens einen Süßstoff ausgewählt aus Stevia/Steviol, Stevia/Steviol, Apartam, Acesulfam oder Sucralose. Die Hartdragierung enthält als Zuckeraustauschstoffe eine Mischung aus D-Maltitol und Erythritol und als Süßstoffe mindestens einen Stoff ausgewählt aus Stevia/Steviol, Aspartam, Acesulfam-K und Sucralose, bevorzugt Aspartam.

Bevorzugt enthält das erfindungsgemäße Hartdragee als Zuckeraustasuchstoffe und Süßstoffe im Komprimatkern nur eine Mischung aus Erythritol, Isomalt, D-Sorbitol und Aspartam und in der Hartdragierung nur eine Mischung aus D-Maltitol, Erythritol und mindestens einem Süßungsmittel ausgewählt aus Steviol, Aspartam, Acesulfam-K und Sucralose und keine anderen Zuckeraustauschstoffe oder Süßstoffe im Hartdragee.

Unter "zuckerfrei" wird im Sinne der Erfindung frei von Rüben- oder Rohrzucker, also frei von Saccharose verstanden, die beispielweise als raffinierter Zucker, Weißzucker, Halbweißzucker, Flüssigzucker oder Invertzucker zuckerhaltigen Süßwaren zugesetzt werden.

Hartdragees im Sinne der Erfindung sind Dragees mit einem festen, harten Komprimatkern und einer harten, kristallinen, glatten Überzugsschicht auf dem Kern, d.h. einer Hartdragierung. Für die Hartdragierung wird einfach oder mehrfach eine Lösung, bevorzugt eine übersättigte Lösung, auf den Kern aufgetragen, die auf dem Kern kristallisiert und so den kristallinen Überzug bildet. Die Form der Hartdragierung entspricht der Form des Kerns, da die Hartdragierung nur einen Überzug des Komprimatkerns darstellt. Die Hartdragierung umgibt den Komprimatkern vollständig, d.h. die gesamte Oberfläche des Komprimatkerns ist bedeckt.

Der Komprimatkern ist erfindungsgemäß ein fester, harter komprimierter Kern und bildet die Einlage des Hartdragees, er ist insbesondere kein Kaugummi, keine Kaumasse und kein Naturprodukt oder Schokolade. Der Komprimatkern ist ein bonbonartiges Stück, das aus Pulver gepresst, also komprimiert wird. Die Komprimatkerne sind wenig hygroskopisch. Der Komprimatkern kann eine beliebige Form haben. Beispielsweise hat er die Form einer Kugel, eines Ellipsoids, einer Linse, eines Zylinders, eines Tetraeders, einer Pyramide, eines Quaders, eines Tropfens, eines Sterns oder eines Herzens.

Zuckeraustauschstoffe sind natürlich vorkommende und süßlich schmeckende Kohlenhydrate. Häufig verwendete Zuckeraustauschstoffe sind die Zuckeralkohole (Polyole). Der Brennwert von Zuckeraustauschstoffen liegt unterhalb dem Brennwert von Zucker.

Süßstoffe haben keinen oder nur einen sehr geringen Energiegehalt und sind um ein Vielfaches süßer als Zucker. Typische Süßstoffe sind natürliche oder synthetische Verbindungen, wie z.B. Saccharin, Cyclamat, Aspartam, Acesulfam und Steviol.

Bevorzugt enthält der Komprimatkern als Zuckeraustauschstoffe und Süßstoffe:

| | | |
|---|---|---|
| • | 30-45 Gew.-% | Erythritol, bevorzugt 35 - 42 Gew.-%, besonders bevor-zugt 37-40 Gew.-% Erythritol, |
| • | 30-45 Gew.-% | D-Sorbitol, bevorzugt 35 - 42 Gew.-%, besonders bevor-zugt 37-40 Gew.-% D-Sorbitol, |
| • | 15 - 25 Gew.-% | Isomalt, besonders bevorzugt 15-20 Gew.-%, besonders bevorzugt 18-20 Gew.-% Isomalt, |
| • | 0,01 - 0,2 Gew.-% | Aspartam, bevorzugt 0,02 - 0,09 Gew.-%, besonders bevorzugt 0,03-0,07 Gew.-% Aspartam, |

bezogen auf das Gesamtgewicht des Komprimatkerns. Besonders bevorzugt enthält der Komprimatkern keine anderen Zuckeraustauschstoffe oder Süßstoffe.

Besonders bevorzugt enthält der Komprimatkern als Zuckeraustauschstoffe und Süßstoffe:

| | | |
|---|---|---|
| • | 37-40 Gew.-% | Erythritol, |
| • | 37-40 Gew.-% | D-Sorbitol |
| • | 18-20 Gew.-% | Isomalt, |
| • | 0,01 - 0,2 Gew.-% | Aspartam, |

bezogen auf das Gesamtgewicht des Komprimatkerns und bevorzugt keine anderen Zuckeraustauschstoffe oder Süßstoffe.

In einer bevorzugten Ausführungsform besteht der Komprimatkern aus

| | | |
|---|---|---|
| • | 93,8 - - 99,695Gew.-%, | Zuckeraustauschstoff bevorzugt 94,0 - 97,5 Gew.-%, Zuckeraustauschstoff |
| • | 0,005 -0,2 Gew.-% | Süßstoff, bevorzugt 0,1 - 0,2 Gew.-%, |
| • | 0,20 - 1,0 Gew.-% | Aroma und |
| • | 0,1 - 5 Gew.-% | bevorzugt 0,4 - 2,0 Gew.-% Hilfsstoffe, bevorzugt Bindemittel/Trennmittel, |

wobei sich die Komponenten des Komprimatkerns zu 100 Gew.-% ergänzen.

Geeignete Hilfsstoffe im Komprimatkern sind beispielsweise Farbstoffe, Vitamine, Mineralstoffe, Säuren, wie Weinsäure, Äpfelsäure, Zitronensäure oder Milchsäure, und Tablettierhilfsmittel, wie Bindemittel und Trennmittel, z.B. Stearate, Mono- und Diglyceride oder Fette und Öle. Bevorzugt enthält der Komprimatkern als Hilfsstoffe nur Tablettierhilfsmittel und/oder Farbstoffe und/oder Vitamine und/oder Mineralstoffe.

Das erfindungsgemäße Hartdragee kann am Schluss des Herstellungsverfahrens noch mit 0-0,1% Carnaubawachs geglänzt werden.

Die Hartdragierung enthält bevorzugt als Zuckeraustauschstoffe und Süßstoffe:

| | | |
|---|---|---|
| - | 55 - 70 Gew.-% | D-Maltitol, bevorzugt 58 - 62 Gew.-% D-Maltitol, |
| - | 5 - 10 Gew.-% | Erythritol, bevorzugt 5 - 7 Gew.-% Erythritol, |
| - | 0,0001 - 0,1 Gew.-% | Stevia und/oder Aspartam, bevorzugt 0,005 - 0,1 Gew.-% Aspartam, |

bezogen auf die Gesamteinwaage der Komponenten der Hartdragierung vor dem Erhitzen. Besonders bevorzugt enthält die Hartdragierung keine anderen Zuckeraustauschstoffe oder Süßstoffe.

In einer bevorzugten Ausführungsform besteht die Hartdragierung nach dem Erhitzen (ohne Wasser aus

| | | |
|---|---|---|
| • | 78 -84 Gew.-% | D-Malitol, |
| • | 5 -10 Gew.-% | Erythritol, bevorzugt 8-10 Gew.-%, |
| • | 0,005 - 0,1 Gew.-% | Stevia und/oder Aspartam, |
| • | 0,01 - 2,0 Gew.-% | Aroma und |
| • | 0,01 - 2,0 Gew.-% | Hilfsstoffe, bevorzugt Gummi Arabicum |

wobei sich die Komponenten der Hartdragierung zu 100 Gew.-% ergänzen.

Bevorzugt wird in im Komprimatkern der erfindungsgemäßen Hartdragees Erythritol mit einer Korngröße von > 200 mg bis 1.000 mg eingesetzt.

Geeignete Hilfsstoffe in der Hartdragierung sind beispielsweise Farbstoffe, Gummi Arabicum und/oder Antioxidantien.

Teil der Hartdragierung ist in einer Ausführungsform eine Aromalösung z.B. eine Vanillelösung. Die Aromalösung ist ein Bestandteil der Dragierung bzw. eine Aromalösung wird ebenfalls im Kern zugegeben.

Alle für das Hartdragee, den Komprimatkern und die Hartdragierung genannten Vorzugsbereiche sind jeweils miteinander kombinierbar, auch wenn die Kombinationen nicht wörtlich genannt sind.

Der Restwassergehalt der Hartdragierung beträgt 0,5 - 3,0 Gew.-%, bevorzugt 2,5 bis 3 Gew.-%.

Das erfindungsgemäße Hartdragee besteht bevorzugt aus
- 20 - 80 Gew.-%, bevorzugt 40-50 Gew.-%, Komprimatkern und
- 20 - 80 Gew.-%, bevorzugt 50-60 Gew.-% Hartdragierung,
bezogen auf das Gesamtgewicht des Hartdragees. Das erfindungsgemäße Hartdragee kann zusätzlich mit einer Außenschicht des Glanzmittels Carnaubawachs versehen sein.

Bevorzugt ist im erfindungsgemäßen Hartdragee die bevorzugte Ausführungsform des Komprimatkerns mit der bevorzugten Ausführungsform der Hartdragierung kombiniert.

Überraschenderweise weisen die erfindungsgemäßen Hartdragees eine gute Kombination von Verarbeitungseigenschaften und Gebrauchseigenschaften auf. Die erfindungsgemäßen Hartdragees haben eine gute Verpressbarkeit, Tablettenhärte und Struktur und weisen gleichzeitig einen guten Geschmack und eine gute Verträglichkeit auf. Die Komprimatkerne der erfindungsgemäßen Hartdragees haben insbesondere eine sehr gute Verpressbarkeit, während eine Reihe von Kombinationen von Zuckeraustauschstoffen zu Granulaten führen, welche schlecht bis gar nicht verpressbar sind.

Während andere Kombinationen von Inhaltstoffen zu einer teigartigen Struktur des Presslings führen, die das orale Erlebnis stark beeinträchtigt, weist das erfindungsgemäße Hartdragee einen harten, festen Kern auf. Die erfindungsgemäßen Hartdragees verhalten sich beim Lutschen wie zuckerhaltige Produkte, während andere zuckerfreie Süßwaren den Effekt ein starkes Kälteempfinden in der Mundhöhle auslösen, was auch das orale Erlebnis negativ beeinflusst. Die erfindungsgemäßen Hartdragees haben dieses Kühl-Effekt Problem nicht. Überraschenderweise haben die erfindungsgemäßen Hartdragees trotz der Kombination aus Zuckeraustauschstoffen und Süßstoffen eine gute Verträglichkeit und führen insbesondere nicht zu Magen-Probleme, wie z.B. Magengrummeln und / oder Gasbildung im Darmbereich.

Das erfindungsgemäße Hartdragee ist bevorzugt ein Minidragee, d.h. das Gewicht pro Dragee beträgt bevorzugt 0,1 bis 1 g, besonders bevorzugt 0,3 bis 0,6 g, weiter bevorzugt 0,4 bis 0,5 g.

### Beispiel

Die Erfindung wird anhand des nachfolgenden Beispiels näher erläutert:
Es wurden eine erfindungsgemäßer Komprimatkern und eine erfindungsgemäße Hartdragierung erzeugt, auf Basis der folgenden Zusammensetzungen:

**Komprimatkern:**

| | Menge in Gew.-% |
|---|---|
| Sorbitol | 37,55 |
| Erythritol | 37,55 |
| Isomalt | 18,78 |
| Weinsäure | 1,45 |
| Milchsäure | 1,00 |
| Magnesiumstearat | 1,25 |
| MCT-Öl | 0,64 |
| Aspartam | 0,13 |
| Aroma | 1,65 |

**Hartdragierung:**

| | **Menge in %** |
|---|---|
| Maltitol | 63,42 |
| Wasser | 27,03 |
| Erythritol | 6,29 |
| Aroma | 2,03 |
| Gummi Arabicum | 0,85 |
| Weinsäure | 0,34 |
| Canaubawachs | 0,02 |
| Apartam | 0,01 |
| Ascorbinsäure | 0,01 |

Zur Herstellung eines Granulats für den Kompromatkern wurde D-Soribitol mit den Aromen und MCT-ÖI, einem mittelkettigen Triglycerid, für 3 min gemischt. Danach wurden die weiteren Zutaten Isomalt, Erythritol, Säuren, Süßstoff und Magnesiumstearat zugegeben und für weitere ca. 2 min gemischt. Die Granulatmischung wurde über ein Sieb gesiebt und für die Verpressung bereitgestellt.

Die Tablettenpresse wurde für die Verpressung der Komprimatkerne vorbereitet. Das Granulat wurde über einen Fülltrichter in die Tablettenpresse eingefüllt und zu Komprimatkernen verpresst.

Die Dragierlösung wurde zubereitet, indem Erythritol mit Wasser auf 98°C erhitzt wurde. Anschließend wurden die restlichen Zutaten laut Rezeptur abgewogen und unterdispergiert. Die homogene Dragierlösung wurde zur weiteren Verwendung auf eine Temperatur von 60°C temperiert.

Nun wurde die Lösung auf die Komprimatkerne aufgesprüht und verschiedene Schichten wurden zusätzlich mit Maltit-Puder abgestreut, bis diese trocken waren. Die unterschiedlichen Dragierschichten wurden mit Luft getrocknet. Dabei verdampft ein Großteil der wässrigen Lösung - zugegebenes Wasser, aber auch Restfeuchte der eingesetzten sonstigen Zutaten.

Der Restwassergehalt der Dragierung nach dem Trocknen betrug 1-3 Gew.%. In einzelne Dragierschichten wurde Aroma zugegeben. Der Dragiervorgang wurde solange wiederholt, bis das gewünschte Gewicht erreicht wurde. Zum Schluss wurden die Dragees mit Carnauba-Wachs geglänzt.

## Patentansprüche

1. Zuckerfreies Hartdragee bestehend aus einem Komprimatkern und einer Hartdragierung, die den Komprimatkern vollständig umgibt, wobei das Hartdragee zuckerfrei ist, **dadurch gekennzeichnet, dass**
- der Komprimatkern als Zuckeraustauschstoffe und Süßstoffe eine Mischung aus Erythritol, Isomalt und D-Sorbitol und mindestens einen Süßstoff ausgewählt aus Apartam, Acesulfam, Sucralose und Stevia/Steviol enthält und
- die Hartdragierung als Zuckeraustauschstoffe und Süßstoffe eine Mischung aus D-Maltitol, Erythritol und mindestens einen Süßstoff ausgewählt aus Apartam, Acesulfam, Sucralose und Stevia/Steviol enthält.

2. Hartdragee gemäß Patentanspruch 1, **dadurch gekennzeichnet, dass** der Komprimatkern als Zuckeraustauschstoffe und Süßstoffe enthält:
| | | |
|---|---|---|
| • | 30-45 Gew.-% | Erythritol, bevorzugt 37 - 40 Gew.-%, |
| • | 30-45 Gew.-% | D-Sorbitol, bevorzugt 37 - 40 Gew.-%, |
| • | 15 - 25 Gew.-% | Isomalt, bevorzugt 18 - 20 Gew.-%, |
| • | 0,01 - 0,2 Gew.-% | Süßstoff, bevorzugt Aspartam, |
bezogen auf das Gesamtgewicht des Komprimatkerns und der Komprimatkern bevorzugt keine anderen Zuckeraustauschstoffe oder Süßstoffe enthält.

3. Hartdragee gemäß Patentanspruch 1 oder 2, **dadurch gekennzeichnet, dass** der Komprimatkern besteht aus
| | | |
|---|---|---|
| • | 93,8 - - 99,6 Gew.-% | Zuckeraustauschstoff, bevorzugt 94 - 97 Gew.-%, |
| • | 0,005 -0,2 Gew.-% | Süßstoff, |
| • | 0,2 - 1,0 Gew.-% | Aroma und |
| • | 0,1 - 5 Gew.-% | Hilfsstoffe, bevorzugt Bindemittel/Trennmittel, |
wobei sich die Komponenten des Komprimatkerns zu 100 Gew.-% ergänzen.

4. Hartdragee gemäß einem der vorhergehenden Patentansprüche, **dadurch gekennzeichnet, dass** die Hartdragierung als Zuckeraustauschstoffe und Süßstoffe enthält:
| | |
|---|---|
| 55 - 70 Gew.-% | D-Maltitol, |
| 5 - 10 Gew.-% | Erythritol |
| 0,005 - 0,1 Gew.-% | Süßstoffe, bevorzugt Aspartam |
bezogen auf die Gesamteinwaage der Komponenten der Hartdragierung vor dem Erhitzen und die Hartdragierung bevorzugt keine anderen Zuckeraustauschstoffe oder Süßstoffe enthält.

5. Hartdragee gemäß einem der vorhergehenden Patentansprüche, **dadurch gekennzeichnet, dass** die Hartdragierung besteht aus
| | | |
|---|---|---|
| • | 58 - 68 Gew.-% | D-Malitol, |
| • | 5 - 10 Gew.-% | Erythritol, |
| • | 0,005 - 0,1 Gew.-% | Aspartam, |
| • | 0,01 - 1,0 Gew.-% | Aroma, |
| • | 0,0 - 2,0 Gew.-% | Hilfsstoffe, bevorzugt Gummi Arabicum, |
wobei sich die Komponenten der Hartdragierung zu 100 Gew.-% ergänzen.

6. Hartdragee gemäß einem der vorhergehenden Patentansprüche, **dadurch gekennzeichnet, dass** das Hartdragee aus
20-80 Gew.-%, bevorzugt 40-50 Gew.-% Komprimatkern und
20 -80 Gew.-%, bevorzugt 50-60 Gew.-% Hartdragierung
besteht, bezogen auf das Gesamtgewicht des Hartdragee.

## Claims

1. Sugar-free, hard coated tablet consisting of a compressed core and a hard coating that completely surrounds the compressed core, wherein the hard coating is sugar-free, **characterised in that**
- the compressed core contains a mixture of erythritol, isomalt and D-sorbitol and at least one sweetener selected from aspartame, acesulfame, sucralose and stevia/steviol as sugar substitutes and sweeteners, and
- the hard coating contains a mixture of D-maltitol, erythritol and at least one sweetener selected from aspartame, acesulfame, sucralose and stevia/steviol as sugar substitutes and sweeteners.

2. Hard coated tablet according to claim 1, **characterised in that** the compressed core contains:
- 30-45% by weight erythritol, preferably 37-40% by weight,
- 30-45% by weight D-sorbitol, preferably 37-40% by weight,
- 15-25% by weight isomalt, preferably 18-20% by weight,
- 0.01 - 0.2% by weight sweetener, preferably aspartame,
with respect to the total weight of the compressed core, as sugar substitutes and sweeteners, and the compressed core preferably contains no other sugar substitutes or sweeteners.

3. Hard coated tablet according to claim 1 or 2, **characterised in that** the compressed core consists of
- 93.8 - 99.6% by weight sugar substitute, preferably 94 - 97% by weight,
- 0.005 - 0.2% by weight sweetener,
- 0.2 - 1.0% by weight flavouring and
- 0.1 - 5% by weight excipients, preferably binding agents/separating agents,
wherein the components of the compressed core add up to 100% by weight.

4. Hard coated tablet according to one of the preceding claims, **characterised in that** the hard coating contains:
55 - 70% by weight D-maltitol,
5 - 10% by weight erythritol
0.005 - 0.1% by weight sweeteners, preferably aspartame
with respect to the total weight of the components of the hard coating before being heated, as sugar substitutes and sweeteners, and the hard coating preferably contains no other sugar substitutes or sweeteners.

5. Hard coated tablet according to one of the preceding claims, **characterised in that** the hard coating consists of
- 58 - 68% by weight D-maltitol,
- 5 - 10% by weight erythritol,
- 0.005 - 0.1% by weight aspartame,
- 0.01 - 1.0% by weight flavouring,
- 0.0 - 2.0% by weight excipients, preferably gum arabic, wherein the components of the hard coating add up to 100% by weight.

6. Hard coated tablet according to one of the preceding claims, **characterised in that** the hard coated tablet consists of
20 - 80% by weight, preferably 40 - 50% by weight of compressed core and
20 - 80% by weight, preferably 50 - 60% by weight of hard coating,
with respect to the total weight of the hard coated tablet.

## Revendications

1. Dragée dure sans sucre, constituée d'un noyau comprimé et d'un enrobage dur qui entoure complètement le noyau comprimé, laquelle dragée dure, qui ne contient pas de sucre, est **caractérisée**
- **en ce que** le noyau comprimé contient, en tant que substituts de sucre et édulcorants, un mélange d'érythritol, d'isomalt et de D-sorbitol et au moins un édulcorant choisi parmi l'aspartame, l'acésulfame, le sucralose et le stévia/stéviol,
- et **en ce que** l'enrobage dur contient, en tant que substituts de sucre et édulcorants, un mélange de D-maltitol et d'érythritol et au moins un édulcorant choisi parmi l'aspartame, l'acésulfame, le sucralose et le stévia/stéviol.

2. Dragée dure conforme à la revendication 1, **caractérisée en ce que** le noyau comprimé contient, en tant que substituts de sucre et édulcorants :
- de 30 à 45 % en poids, et de préférence de 37 à 40 % en poids, d'érythritol,
- de 30 à 45 % en poids, et de préférence de 37 à 40 % en poids, de D-sorbitol,
- de 15 à 25 % en poids, et de préférence de 18 à 20 % en poids, d'isomalt,
- et de 0,01 à 0,2 % en poids d'édulcorant, et de préférence d'aspartame,
par rapport au poids total du noyau comprimé, et **en ce que** le noyau comprimé ne contient de préférence pas d'autres substituts de sucre ou édulcorants.

3. Dragée dure conforme à la revendication 1 ou 2, **caractérisée en ce que** le noyau comprimé est constitué :
- de 93,8 à 99,6 % en poids, et de préférence de 94 à 97 % en poids, de substitut de sucre,
- de 0,005 à 0,2 % en poids d'édulcorant,
- de 0,2 à 1,0 % en poids d'arôme,
- et de 0,1 à 5 % en poids d'adjuvants, et de préférence de liant/anti-agglomérant,
étant entendu que ces composants du noyau comprimé font en tout 100 % en poids.

4. Dragée dure conforme à l'une des revendications précédentes, **caractérisée en ce que** l'enrobage dur contient, en tant que substituts de sucre et édulcorants :
- de 55 à 70 % en poids de D-maltitol,
- de 5 à 10 % en poids d'érythritol,
- et de 0,005 à 0,1 % en poids d'édulcorants, et de préférence d'aspartame,
par rapport au poids total des composants de l'enrobage dur avant le chauffage, et **en ce que** l'enrobage dur ne contient de préférence pas d'autres substituts de sucre ou édulcorants.

5. Dragée dure conforme à l'une des revendications précédentes, **caractérisée en ce que** l'enrobage dur est constitué :
- de 58 à 68 % en poids de D-maltitol,
- de 5 à 10 % en poids d'érythritol,
- de 0,005 à 0,1 % en poids d'aspartame,
- de 0,01 à 1,0 % en poids d'arôme,
- et de 0,0 à 2,0 % en poids d'adjuvants, et de préférence de gomme arabique,
étant entendu que ces composants de l'enrobage dur font en tout 100 % en poids.

6. Dragée dure conforme à l'une des revendications précédentes, **caractérisée en ce que** la dragée dure est constituée :
- de 20 à 80 % en poids, et de préférence de 40 à 50 % en poids, de noyau comprimé,
- et de 20 à 80 % en poids, et de préférence de 50 à 60 % en poids, d'enrobage dur,
par rapport au poids total de la dragée dure.
